# EUROPEAN PATENT SPECIFICATION

(11) **EP 1 910 189 B1**
(45) Date of publication and mention of the grant of the patent: **12.01.2011**
(21) Application number: 06726374.9
(22) Date of filing: 13.03.2006
(51) Int. Cl.: B65D 81/34

(54) **SELF-HEATING OR SELF-COOLING CONTAINERS**
SELBSTERHITZENDE ODER SELBSTKÜHLENDE BEHÄLTER
RECIPIENTS AUTOCHAUFFANTS OU AUTOREFROIDISSANTS

(30) Priority: 12.03.2005 GB 0505154
(43) Date of publication of application: 16.04.2008
(73) Proprietor: BHAM, Sabbir, Ahmed, Stoneygate Leicester LE2 2RB (GB)
(72) Inventor: BHAM, Sabbir, Ahmed, Stoneygate Leicester LE2 2RB (GB)
(74) Representative: Marshall, John Grahame
(86) International application number: PCT/GB2006/000881
(87) International publication number: WO 2006/097699

(56) References cited:
- EP-A- 0 255 494
- WO-A-02/01994
- US-A- 628 359
- US-A- 5 628 304
- US-A1- 2004 065 315

## Description

### Field of the Invention

The invention relates to self-heating or self-cooling containers, which function without the application of external energy for heating or for cooling solid or liquid foodstuffs within the container.

### Background of the Invention

The concept of providing a double-walled container which defines a reaction cell between its walls, and of selectively mixing together chemical reagents within that reaction cell so that the exothermic or endothermic reaction between those reagents causes heating or cooling of the contents of the container, is well known and documented. Reference is made to the following Patent Specifications: EP-A-0084532, EP-A-0082834, FR-A-2231341, DE-A-2730243, DE-A-2606806, DE-A-2255405, IT-A-1002244, IT-A-942063, GB-A-2261501, GB-A-2089970, US-3653372, US-5628304, US-5255812, US-5220909, US-4809673, US-4793323, US-4733389 and US-4057047.

In particular, US-5628304 discloses a self-heating container which has the attributes of the pre-characterising portion of claim 1. US-628359 discloses a self-heating container with a metal barrier separating lime and water reagents in the reaction cell. That barrier can be punctured by hammering a nail or the like through a cover of the container and through the barrier, but to draw water through the puncture hole the lime-containing portion of the reaction cell is first evacuated using an air pump.

Despite the wealth of research into such self-heating and self-cooling containers, and despite the fact that some such products have been launched on the market, the fact remains that the technology has not won popular acceptance. The almost universal disadvantage of such products is that an adequate temperature variation cannot be obtained in a suitably short period of time without using unacceptably large quantities of the chemical reagents. It is therefore an object of this invention to improve the above technology so that this disadvantage is removed. If containers are to be designed as self-heating containers, for example cups to create an instant hot drink for the user, then it is desirable that the heated beverage should reach a temperature of at least 80°C, and preferably about 90°C, within a relatively short target time of, for example, two or three minutes. In the case of a self-cooling container, such as a drinking cup for a cold drink, then the corresponding temperature variation is preferably one that will reduce the contents of the container from ambient to 5°C or less within the same predetermined time.

### The Invention

The invention provides a self-heating or self-cooling container for food or drink, having the characteristic features of claim 1 herein. The container is a single-use container comprising inner and outer vessels with a reaction chamber in the space between those two vessels. The exothermic or endothermic chamical reaction takes place in this reaction chamber. The two vessels must be joined and sealed very firmly to establish a totally sealed and secure reaction cell and must be sufficiently strong and rigid to tolerate any changes in ambient temperature and pressure over long periods of time before use. The inner vessel should be highly inert as it can be in direct contact with the food or drink. The inner vessel also should be sufficiently rigid to tolerate the subatmospheric pressure established in the first chamber prior to user. It is advantageously made of a thermally conductive material, and it has been found that aluminium is a very suitable material for the inner vessel. The outer vessel should also be made of a relatively rigid material because it also has to withstand the subatmospheric pressure of the first chamber prior to use. In general, the outer vessel is made of thermoplastic material, and preferably the outer vessel is provided with external ribbing which serves the dual function of increasing the rigidity to resist collapse due to the sub-atmospheric pressure in the first chamber of the reaction cell before actuation, and providing a texture to the outer surface of the container which is comfortable to handle and protects the user against an excessive and uncomfortable heat transfer from the heated or cooled contents of the container to the hands of anyone holding the container in use.

To actuate the self-heating or self-cooling properties of the container, the following sequence of operations is preferably followed. First, the container is preferably shaken. This loosens the dry powdered first chamical reagent in the first chamber, which may have settled and possibly may have become caked into a solid mass on prolonged storage. The shaken container is then placed inverted on a flat surface so that the movable bottom wall of the outer vessel becomes visible and accessible. If the container has a removable lid, then that lid is left in position at this stage to create a stable support surface for resting the container in the inverted condition on the flat surface. The visible movable bottom wall of the outer vessel is then depressed, which has the effect of rupturing the frangible barrier which is a thin sheet of brittle material which initially separates the first and second chambers of the reaction cell. With the rupturing of the barrier, the liquid second chemical reagent from the second chamber passes rapidly into the first chamber where it mixes with the dry powdered first chemical reagent. The speed of that initial mixing is due in part to gravity, because the container is inverted when the frangible barrier is ruptured, so that the liquid second chemical reagent falls naturally under gravity into the first chamber. The speed and vigour of transfer of the liquid second chemical reagent into the first chamber is, however, vastly increased because the pressures in the first and second chambers are initially different, and rupturing the frangible barrier causes equalisation of the pressures, accompanied by a very rapid transfer of the liquid into the first chamber. The speed and vigour of the transfer is such that an extremely rapid mixing together of the two chemical reagents takes place. The intimacy of the mixing can be enhanced by a preliminary rapid shaking of the container at this stage, although after shaking, the container should be left in the inverted condition for at least two minutes for the exothermic or endothermic reaction to proceed to completion.

The frangible barrier is a thin brittle plate such as a plate of thin rigid plastic or ceramic or even a thin glass sheet. Rupture of that barrier is then accompanied by an almost instantaneous disintegration of the sheet or plate over the whole of its area, which gives the most rapid possible mixing of the first and second chemical reagents.

The chemical reagents used can be varied widely, the only criteria being that a large positive or negative heat of reaction is desirable, and preferably that the reaction product is solid or semi-solid. A solid or semi-solid reaction product is effective to hold the reagents and the reaction product in the first chamber even after turning the container right side up, when they remain in good heat exchange contact with the food or drink in the inner vessel throiugh the wall of the inner vessel, until the reaction is complete. Although a solid or semi-solid reaction product is preferable, it should also be porous so that any vapours or reaction gases that are generated during the reaction can find their way through the otherwise solid or semi-solid reaction product, to collect in the second chamber. For example, if the first and second chemical reagents incorporate chemicals which react together to generate a small quantity of gas, then that generated gas can be sufficient to render the solid or semi-solid reaction product porous. To give a more concrete example, if the first chemical reagent incorporates a small quantity of sodium bicarbonate and the second chemical reagent is acidic, then on admixture of the two chemical reagents a small quantity of carbon dioxide is evolved, sufficient to render the solid or semi-solid reaction product porous. Because the reaction takes place while the container is inverted, the evolved carbon dioxide together with any other gases or vapours produced as a by-product of the reaction can pass upwardly through the solid or semi-solid but porous reaction product, to collect in the second chamber of the reaction cell which is formed in the base portion of the outer vessel.

The second chamber of the reaction cell may be provided with a pressure release valve for venting to atmosphere any gases which are generated during the chemical reaction or any excess pressure caused within the reaction cell by the heating of its contents, following rupture of the frangible barrier. Clearly the increase of the pressure within the reaction cell by generation of gaseous reaction by-products and/or by simple thermal expansion of the gas within the reaction cell is minimised very effectively by the fact that the first chamber is at a sub-atmospheric pressure prior to the rupture of the frangible barrier. Nevertheless some means for controlling the internal pressure within the reaction cell during the reaction is desirable.

The Applicants have now found that, instead of the above pressure release valve, a preferred method of controlling the pressure within the reaction cell is to have the first and second chambers both formed as sealed chambers, with the second chamber being a variable volume chamber capable of expansion to accommodate any gases generated or caused thermally to expand by the chemical reaction between the reagents following rupture of the frangible barrier. For example, the second chamber could be formed with a corrugated side wall, so that a partial straightening of the corrugations causes an expansion of the internal volume of the second chamber to accommodate any increase in the volume of the gases contained within the reaction cell during the course of the chemical reaction. One useful variation of that concept is for the variable volume second chamber to be also capable of a partial tightening of the corrugations to cause an initial reduction in the internal volume of the second chamber when the frangible barrier is first ruptured and the pressure equalisation between the first and second chambers causes an initial fall in the pressure prevailing in the second chamber. Such an initial reduction in the internal volume of the second chamber has the added benefit that the speed of transfer of the liquid second chemical reagent into the first chamber is much faster, because the initial partial collapse of the second chamber removes the possibility of any back pressure resisting the transfer of the liquid second chemical reagent into the first chamber.

The chemical reagents can be any which react together with an exothermic or endothermic reaction. Reagents which have a high (large positive or large negative) heat of reaction are clearly preferable. The dry powdered first chemical reagent in the first chamber may be an oxide or hydroxide of an alkali or alkaline earth metal, or a mixture of such oxides and/or hydroxides to generate the desired heat of reaction. Apart from the above metal oxides and hydroxides certain excipients, preferably of a surfactant nature, may be incorporated into the dry powdered first chemical reagent. Examples include stearic acid, lauryl alcohol and magnesium carbonate, all of which help in controlling and ultimately suppressing the reaction. The liquid second chemical reagent in the second reaction chamber may comprise water or an aqueous solution of one or more acids, such as acetic acid, oxalic acid, oleic acid, a polyphosphoric acid or a mixture thereof. Preferably the liquid second chemical reagent also includes one or more inert materials such as oil-soluble surfactants which assist the rapid wetting of the powdered first chemical reagent by the liquid second chemical reagent and which thus help in controlling and finally suppressing the exothermic or endothermic chemical reaction. Examples of such inert materials include polyethoxylated alcohols, stearic acid, mineral oils and waxes.

The choice of chemicals together with their surfactants and other excipients, and the amounts of chemicals used, is preferably sufficient to create a temperature rise within the reaction cell (for a self-heating container) up to about 105°C to 110°C and to maintain that temperature for from two to five minutes, thereafter decreasing gradually. That would be sufficient to raise the temperature of the food or drink in the inner vessel, provided the volumes of the reaction cell and the inner vessel are suitably chosen, to from 80°C to 90°C. Similarly for a self-cooling container, the reagents should create a temperature within the reaction cell of 2°C or less for from two to five minutes. That would be sufficient to lower the temperature of the food or drink in the inner vessel to from 5°C to 10°C, depending on the ambient temperature and provided the volumes of the reaction cell and the inner vessel are suitably chosen.

### Drawings

The invention is illustrated by the accompanying drawings, of which:
Figure 1 is a vertical section through a self-heating drink container according to the invention;
Figure 2 is a vertical section through the drink container of Figure 1, but inverted;
Figure 3 is a vertical section through the inverted drink container of Figure 2, after depressing the domed section of the inner base to rupture the frangible barrier which divides the reaction cell into two compartments;
Figure 4 is the same vertical section as that of Figure 3, but after shaking the container and before the chemical reaction is complete;
Figure 5 is the same vertical section as Figure 4, but when the chemical reaction within the reaction cell is complete; and
Figure 6 is a vertical section through the drink container of Figure 5 after it has been placed right way up, and after removal of the removable lid and removable film seal covering the top of the container.

The container shown in the drawings is schematic only. The drawings are intended to illustrate the principle of construction and the principle of use of the container of the invention, rather than the precise proportions of the container. It will be appreciated that any of a vast range of container shapes could be chosen, that the volume of the reaction cell portion needs to be matched to the volume and nature of liquid or other foodstuff placed in the inner vessel, and on the volumes and nature of the chemicals used.

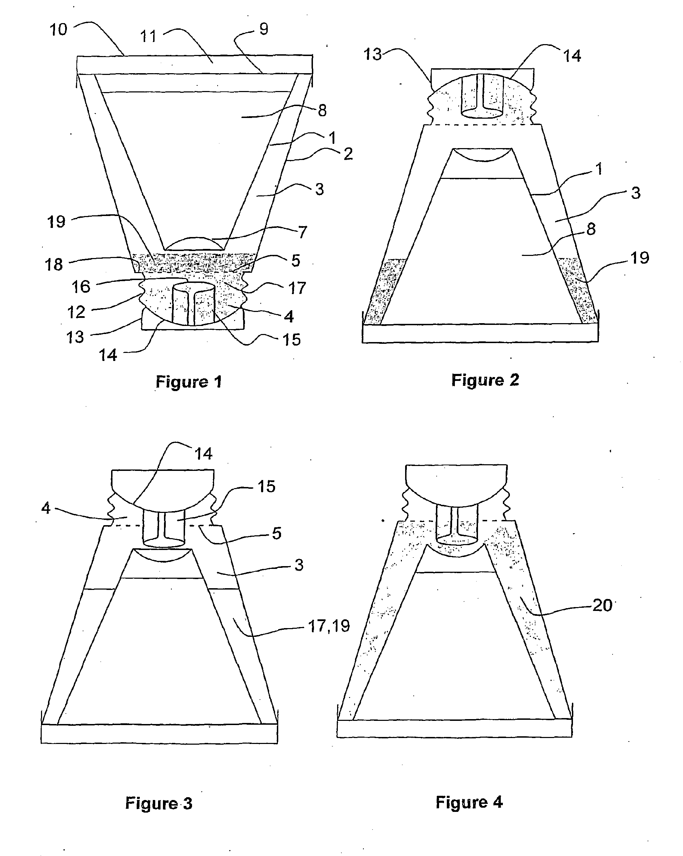

Figure 1 shows the container as it would be sold, before use. The container comprises an inner vessel 1 and an outer vessel 2 which between them define a reaction cell. That reaction cell is divided into a first chamber 3 and a second chamber 4 by a rupturable frangible barrier 5 which is shown in Figure 1 in broken line. The inner vessel 1 is made of a rigid thermally conductive material such as aluminium. The outer vessel 2 is made of a rigid thermally insulating material such as hard thermoplastic material, the rigidity of which may be increased by forming the outside as an array of discrete closely spaced longitudinal ribs (not illustrated) which add to the rigidity of the outer vessel 2 and also provide beneficial thermal barrier properties so that the hot container can be picked up and held in the hands of a user without burning his or her fingers. The inner and outer vessels are joined together around their outer rim at flange portion 6. The base of the inner vessel 1 is domed at 7, to increase the resistance of the reaction cell to distortion due to pressure variations.

The inner vessel 1 contains a liquid beverage 8 such as tea or coffee which is intended to be drunk hot. That beverage 8 is sealed into the container by virtue of a removable film seal 9 which is secured to the rim 6 for example by a foodstuff-compatible adhesive or by heat welding. Over the top of the container and film seal 9 is a cover 10 of hard plastics material, the cover 10 being shaped so that a void space 11 is formed between the underside of the cover 10 and the film seal 9, for reasons which will be described later.

The second chamber 4 comprises a corrugated outer wall 12 which leads on contiguously to a cylindrical base portion 13. The base of the second chamber 4 is provided by a domed wall 14 which extends across the bottom of the second chamber 4, connecting to the side wall between the corrugated portion 12 and the cylindrical portion 13. As shown in Figure 1, the domed base 14 is convex to the underside of the container, and carries an integral knife blade 15 which is upstanding from the bottom of the domed base 14 in the direction of the frangible barrier 5 and stops just short of the frangible barrier 5. As illustrated in Figure 1, the outer vessel 2, the corrugated base 12, the cylindrical portion 13 and the moulded blade 15 can be made in one piece by injection moulding. The blade 15 is made of the same hard plastics material as the remainder of the outer vessel 2, and forms a nearly complete cylinder upstanding from the domed base 14 with a sharp cutting upper edge 16.

The frangible barrier 5 is a thin sheet of brittle plastic material that is below its glass transition temperature, or even a very thin sheet of glass itself. This has the property of completely shattering when it is broken by depression of the movable bottom wall of the outer vessel as described below, with the subsequent very rapid mixing of the liquid and powdered chemical reagents.

During manufacture and assembly of the container of the invention, a liquid chemical reagent 17 is filled into the second chamber 4 before the frangible barrier 5 is secured in position. The frangible barrier 5 can be secured to an internal shoulder portion of the outer vessel 2 by adhesive or by welding (which may be chemical or heat welding) so as to create a completely sealed second chamber 4 filled with the liquid chemical reagent 17. A powdered chemical reagent 19 is added to the outer vessel 2 before the inner vessel 1 is placed in position and sealed around its top rim 6. Before the inner and outer vessels 1 and 2 are sealed together, the first chamber 3 above the powdered chemical reagent 19 is evacuated, so that once the seal around the rim 6 is complete, the first chamber 3 is at sub-atmospheric pressure. Finally, the beverage 8 is added, and the removable film seal 9 and cover 10 are placed over the top of the container.

In use, when the user wants to heat the contents of the container, the container may be shaken to loosen the dry powdered reagent 19 which might have formed a solid cake in the first chamber 3, and is then inverted as shown in Figure 2. Figure 2 is identical to Figure 1 except that it will be seen that the powdered chemical reagent 19 has fallen to the bottom of the first chamber 3, and the beverage 8 has fallen to the bottom of the inner vessel 1. It will be seen from Figure 2 that inversion of the container exposes to the eye of the user the domed base 14 which is visible at the centre of the cylindrical skirt 13.

The user then depresses the domed base 14 as shown in Figure 3, so that the knife blade 15 cuts or otherwise ruptures the frangible barrier 5. As soon as that frangible barrier 5 is ruptured, the liquid contents of the second chamber 4 pass into the first chamber 3. The transfer of the contents of the second chamber 4 into the first chamber 3 is extremely rapid, because the liquid falls under gravity but is also assisted very considerably indeed by the pressure equalisation between the first and second chambers 3 and 4. Indeed the rupturing of the membrane 5 is also assisted by the pressure differential that initially exists between the first and second chambers 3 and 4. As soon as the blade 15 ruptures the frangible barrier 5, the subatmospheric pressure existing in the first chamber 1 is transferred to the second chamber 2, with the result that ambient atmospheric pressure acting on the top of the domed base 14 acts to assist the pressure exerted by the user, so that the domed base 14 flips over to the inverted position shown in Figure 3 extremely rapidly, with that flip-over causing physical ejection of much of the contents of the second chamber 4 into the first chamber 3 at considerable velocity. That causes a very rapid mixing together of the liquid and solid chemicals 17 and 19, with the initial intimate mix of those chemicals being shown in Figure 3 under the combined reference, 17,19.

Although not illustrated in Figure 3, the rapidity of the ejection of the liquid content 17 of the second chamber 4 can be assisted after the total inversion of the domed base 14 by an automatic partial tightening of the corrugations of the corrugated wall 12, so as to reduce further the volume of the second chamber 4. That tightening is a result of the sub-atmospheric pressure in the first chamber being shared with the second chamber. When that sub-atmospheric pressure is transferred in whole or in part to the second chamber, the volume of the second chamber tends to decrease, and if it is permitted to decrease by virtue of a contraction of the corrugated wall 12, that decrease acts to assist the ejection of the liquid contents of the second chamber into the first chamber.

The container is then preferably shaken by the user to continue the mixing and to ensure that the mixed chemicals come into intimate contact with the whole of the outer surface of the inner vessel 1. The chemicals react, resulting in a solid or semi-solid residue. The reaction is exothermic, as will be discussed below. Figure 4 shows the result of shaking. The reaction between the liquid and solid chemicals is not yet complete, but the reagents are reacting together to form a solid residue 20. It is preferred that the solid residue 20 is porous, so that any vapours or gaseous reaction products can pass up through the porous residue into the second chamber 4. The porosity is achieved automatically if the chemical reagents react together to produce gaseous by-products, but if the primary reagents would not on their own produce gaseous by-products, then it is quite feasible that the powdered chemical reagent 19 should contain a small amount of sodium bicarbonate NaHCO₃ and that the liquid reagent 17 should be acidic, so that a small amount of carbon dioxide is generated during the course of the chemical reaction.

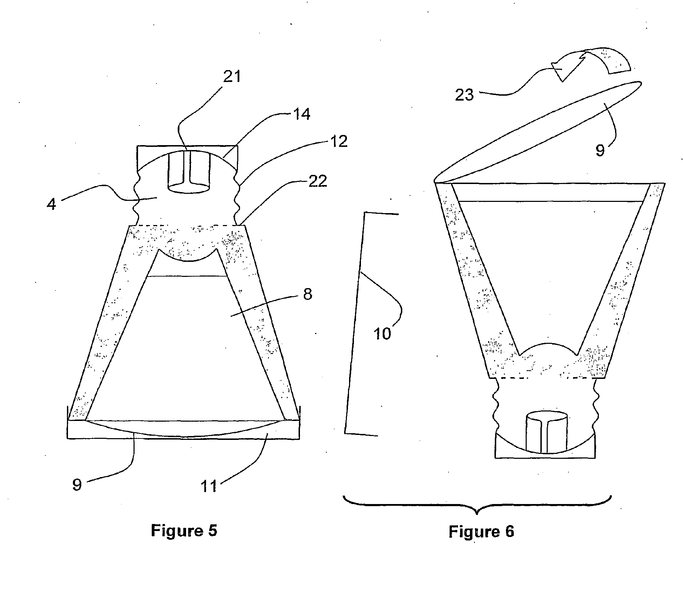

After shaking, the container is allowed to stand in its inverted condition for a short period of time, preferably no more than three minutes, until the reaction is complete. At completion of the reaction, the residue in the first chamber 3 is solid or semi-solid and porous, and the second chamber 4 has filled with gaseous by-products of the reaction. That is the condition shown in Figure 5, and it will be observed that the domed base 14 has been pressed back into its convex shape by the mounting pressure in the second chamber 4, and that the corrugations of the corrugated outer wall 12 have been marginally straightened so as to increase the volume of the second chamber 4. In this way, an excessive pressure build up in the second chamber 4 has been avoided, so that the need for any pressure relief valve is also avoided.

At the end of the reaction as shown in Figure 5, the exothermic nature of the reaction has caused the contents 8 of the inner vessel 1 to heat up. If the removable film seal 9 across the rim 6 of the container is slightly flexible and elastic, it will bow outwardly as shown in Figure 5, so that it extends into the void space 11.

Preferably a marking on the domed base 14 is made in a visible position such as that shown as 21 in Figure 5, but using a temperature- responsive ink so that the colour of the ink changes when the contents of the container reach the recommended drinking temperature. An alternative location for the marking in temperature-responsive ink could be the shoulder surrounding the corrugated side wall 12, as shown at 22 in Figure 5. The significance of the locations 21 and 22 is that they encourage the user to keep the container inverted as shown in Figure 5 until the temperature-responsive coloured ink indicates that the contents 8 are at drinking temperature, which may be from 85°C to 90 °C.

When the user observes that the contents 8 are at drinking temperature, the container can be placed once again the right way up as shown in Figure 6, the lid 10 removed and the film seal 9 torn away as indicated by the arrow 23.

The embodiment of the invention as just described establishes for the first time ever a commercially saleable self-heating container containing a beverage intended to be drunk at temperatures as high as 80°C to 90°C, being a container which reliably reaches the specified temperature. Prior art containers have at best raised the temperature of the contents to something unpleasantly and unpalatably low, often less than 50°C. It is the use of vacuum in the first chamber of the reaction cell which causes an immediate and intimate mixing of the chemical reagents when required, to ensure that the chemical reaction takes place quickly so that it is completed within a relatively short period, preferably no more than three minutes.

A wide range of chemical reagents is suitable for use in this invention, including all of those specifically recited in our earlier two Indian Patent Applications referred to above. The chemicals are completely isolated from both the user and the contents of the inner vessel 1, because the reaction cell 3,4 is a sealed space. No pressure relief valves are shown in Figures 1 to 6, because the volume of the second chamber 4 is variable as seen in Figure 5, to accommodate changes in the volume of the gases and vapours contained in the reaction cell.

## Claims

1. A self-heating or self-cooling container for food or drink comprising an inner vessel (1) made of thermally conductive material for containing the food or drink, the top of the inner vessel being sealed by a removable film seal (9), an outer vessel (2) made of a thermally insulating material and a two-chamber reaction cell (3,4) formed between the inner and outer vessels, wherein the reaction cell comprises a first chamber (3) formed between mutually spaced side walls of the inner and outer vessels and across a bottom wall of the inner vessel, and a second chamber (4) formed in a base portion of the outer vessel, the first and second chambers being mutually separated by a frangible barrier (5) that can be ruptured by depressing a movable bottom wall (14) of the outer vessel, the first chamber containing a dry powdered first chemical reagent (19) and the second chamber containing a liquid second chemical reagent (17), wherein the first and second chemical reagents react together, when mixed, in an exothermic or endothermic chemical reaction to cause the heating or cooling of the contents of the inner vessel,
**CHARACTERISED IN THAT**
prior to rupture of the frangible barrier (5) the first chamber (3) is at subatmospheric pressure and the second chamber (4) is at a higher pressure, so that on rupture of the frangible barrier, which is a thin sheet of brittle material, the equalisation of that pressure differential assists the passage of the liquid second chemical reagent (17) into the first chamber to encourage rapid mixing of the chemical reagents in the first chamber.

2. A container according to claim 1, further comprising a removable lid (10) covering the top of the container to provide a stable support surface for resting the container in an inverted condition on a flat surface, the removable lid establishing a void space between the removable film seal (9) over the top of the inner vessel (1) and the lid so that after inversion of the container, depression of the movable bottom wall (14) of the outer vessel to rupture the frangible barrier (5), shaking the container further to encourage mixing of the first and second chemical reagents and standing the inverted container on a flat surface, any volume expansion of the contents of the inner vessel is accommodated by stretching of the removable film seal into the void space.

3. A container according to claim 1 or claim 2, wherein the second chamber (4) incorporates a gas release valve for the release to the atmosphere of any gases generated or caused thermally to expand by the chemical reaction between the reagents following rupture of the frangible barrier (5).

4. A container according to claim 1 or claim 2, wherein the first and second chambers (3,4) are sealed chambers, and the second chamber (4) is a variable volume chamber capable of expansion to accommodate any gases generated or caused thermally to expand by the chemical reaction between the reagents following rupture of the frangible barrier (5).

5. A container according to claim 4, wherein the second chamber (4) has a corrugated side wall (12) so that a partial straightening of the corrugations causes the expansion of the internal volume of the second chamber.

6. A container according to claim 5, wherein the variable volume second chamber (4) is also capable of a partial tightening of the corrugations to cause a reduction in the internal volume of the second chamber when the frangible barrier (5) is first ruptured and the pressure equalisation between the first and second chambers (3,4) causes an initial fall in the pressure prevailing in the second chamber.

7. A container according to any preceding claim, further comprising a temperature indicator comprising a message or symbol printed on the outside of the container in a temperature-responsive ink which changes colour when a predefined temperature of that outer wall of the container is reached.

8. A container according to claim 7, wherein the message or symbol is printed on the bottom wall of the container so as to be visible only when the container is inverted.

9. A container according to any preceding claim, wherein the first and second chemical reagents (17,19) react together to create a product of reaction which is solid or semi-solid.

10. A container according to claim 9, wherein the first and second chemical reagents (17,19) incorporate chemicals which react together to generate a quantity of gas sufficient that the solid or semi-solid reaction product is rendered porous.

11. A container according to claim 10, wherein the first chemical reagent (17) incorporates a small quantity of sodium bicarbonate, NaHCO₃, and the second chemical reagent (19) is acidic, so that on admixture a small quantity of CO₂ is evolved, sufficient to render the solid or semi-solid reaction product porous.

## Patentansprüche

1. Selbsterhitzender oder selbstkühlender Behälter für Speisen oder Getränke, mit einem inneren Gefäß (1) aus thermisch leitfähigem Material zur Aufnahme der Speisen oder Getränke, wobei das Kopfteil des inneren Gefäßes durch eine entfernbare Filmdichtung (9) abgedichtet ist, mit einem äußeren Gefäß (2), welches aus einem thermisch isolierenden Material und einer ZweiKammer-Reaktionszelle (3, 4) gefertigt ist, welche zwischen dem inneren und dem äußeren Gefäß gebildet ist, wobei die Reaktionszelle eine erste Kammer (3), welche zwischen zwei zu einander beabstandeten Seitenwänden des inneren und des äußeren Gefäßes und quer eine Bodenwand des inneren Gefäßes aufweist, und eine zweite Kammer (4), welche in einem Basisabschnitt des äußeren Gefäßes gebildet ist, wobei die erste und die zweite Kammer von einander beabstandet sind durch eine zerbrechliche Barriere (5), welche durch Drücken einer bewegbaren Bodenwand (14) des äußeren Gefäßes zerbrochen werden kann, wobei die erste Kammer einen trockenen puderartigen ersten chemischen Wirkstoff (19) und die zweite Kammer einen flüssigen zweiten chemischen Wirkstoff (17) enthält, wobei der erste und der zweite chemische Wirkstoff, wenn sie gemixt werden, in einer exothermen oder exothermen chemischen Reaktion miteinander reagieren, um das Heizen oder Kühlen des Inhalts des inneren Gefäßes zu verursachen,
**dadurch gekennzeichnet,**
**dass** vor dem Zerbrechen der zerbrechlichen Barriere (5) die erste Kammer (3) sich unter einem subatmosphärischen Druck und die zweite Kammer (4) sich unter einem höheren Druck befindet, sodass beim Zerbrechen der zerbrechlichen Barriere, welche eine dünne Platte aus sprödem Material ist, der Ausgleich des Druckdifferentials den Durchfluss des flüssigen zweiten chemischen Wirkstoffs (17) in die erste Kammer zur Förderung einer schnellen Mischung der chemischen Wirkstoffe in der ersten Kammer unterstützt.

2. Behälter nach Anspruch 1, mit einem entfernbaren Deckel (10), welcher das Kopfteil des Behälters bedeckt, um eine stabile Trägerfläche zu bieten, damit der Behälter in einer umgekehrten Lage auf einer flachen Oberfläche ruhen kann, wobei der entfernbare Deckel einen Leerraum zwischen der entfernbaren Filmdichtung (9) über dem Kopfteil des inneren Gefäßes (1) und dem Deckel bildet, sodass nach Umkehrung des Behälters ein Drücken der bewegbaren Bodenwand des äußeren Gefäßes zum Zerbrechen der zerbrechlichen Barriere (5), weiteres Schütteln des Behälters, um die Mischung des ersten und des zweiten chemischen Wirkstoffs zu fördern und Stehen des umgekehrten Behälters auf einer flachen Oberfläche jede Volumenausdehnung der Inhalte des inneren Gefäßes durch Strecken der bewegbaren Filmdichtung in den Leerraum begleitet wird.

3. Behälter nach Anspruch 1 oder Anspruch 2, bei dem die zweite Kammer (4) ein Gasablassventil aufweist, um sämtliche Gase, welche durch die chemische Reaktion zwischen den Wirkstoffen infolge eines Zerbrechens der zerbrechlichen Barriere (5) erzeugt werden oder veranlasst werden, sich thermisch auszudehnen in die Atmosphäre abzulassen.

4. Behälter nach Anspruch 1 oder Anspruch 2, bei dem die erste und die zweite Kammer (3, 4) abgedichtete Kammern sind und bei dem die zweite Kammer (4) eine Kammer mit variierbarem Volumen ist, welche geeignet ist, sich auszudehnen, um sämtliche Gase, welche durch die chemische Reaktion zwischen den Wirkstoffen, welche dem Zerbrechen der zerbrechlichen Barriere folgt, erzeugt werden oder veranlasst werden, sich thermisch auszudehnen, unterzubringen.

5. Behälter nach Anspruch 4, bei dem die zweite Kammer (4) eine gerippte Seitenwand (12) aufweist, sodass ein teilweises Strecken der Rippungen das Ausdehnen des inneren Volumens der zweiten Kammer bewirkt.

6. Behälter nach Anspruch 5, bei dem die zweite Kammer (4) mit variablem Volumen auch geeignet ist, für ein teilweises Verengen der Rippungen, um eine Verringerung im inneren Volumen der zweiten Kammer zu verursachen, wenn die zerbrechliche Barriere (5) zuerst zerbrochen wird und der Druckausgleich zwischen der ersten und der zweiten Kammer (3, 4) einen anfänglichen Abfall des Druckes verursacht, welcher in der zweiten Kammer herrscht.

7. Behälter nach einem der vorhergehenden Ansprüche, mit einem Temperaturanzeiger mit einer Nachricht oder einem Symbol, welches auf der Außenseite des Behälters mit einer auf Temperatur ansprechenden Tinte gedruckt ist, welche die Farbe ändert, wenn eine vordefinierte Temperatur der äußeren Wand des Behälters erreicht wird.

8. Behälter nach Anspruch 7, bei dem die Nachricht oder das Symbol auf der Bodenwand des Behälters gedruckt ist, sodass man sie nur sehen kann, wenn der Behälter umgedreht ist.

9. Behälter nach einem der vorhergehenden Ansprüche, bei dem der erste und der zweite chemische Wirkstoff (17, 19) miteinander reagieren, um ein Reaktionsprodukt zu schaffen, welches fest oder halbfest ist.

10. Behälter nach Anspruch 9, bei dem der erste und der zweite chemische Wirkstoff (17, 19) Chemikalien enthalten, welche miteinander reagieren, um eine Gasmenge zu erzeugen, welche ausreicht, dass das feste oder halbfeste Reaktionsprodukt porös gemacht wird.

11. Behälter nach Anspruch 10, bei dem der erste chemische Wirkstoff (17) eine geringe Menge von Natriumbikarbonat, NaHCO₃ aufweist, und wobei der zweite chemische Wirkstoff (19) sauer ist, sodass bei einer Zumischung eine geringe Menge von CO₂ entwickelt wird, welche ausreicht, um das feste oder halbfeste Reaktionsprodukt porös zu machen.

## Revendications

1. Récipient autochauffant ou autorefroidissant pour aliment solide ou liquide, comprenant une cuve intérieure (1) en matière thermoconductrice destinée à contenir l'aliment solide ou liquide, le sommet de la cuve intérieure étant hermétiquement fermé par un film d'étanchéité amovible (9), une cuve extérieure (2) en matière d'isolation thermique et une cellule de réaction (3, 4) formée entre les cuves intérieure et extérieure, la cellule de réaction comportant une première chambre (3) formée entre des parois latérales, espacées l'une de l'autre, des cuves intérieure et extérieure et d'un côté à l'autre d'une paroi de fond de la cuve intérieure, et une second chambre (4) formée dans une partie basale de la cuve extérieure, les première et seconde chambres étant séparées l'une de l'autre par une barrière à casser (5) qui peut se rompre par enfoncement d'une paroi mobile de fond (14) de la cuve extérieure, la première chambre contenant une premier réactif chimique sec en poudre (19) et la seconde chambre contenant un second réactif chimique liquide (17) , les premier et second réactifs chimiques réagissant l'un avec l'autre, lorsqu'ils se mélangent, en une réaction chimique exothermique ou endothermique afin de provoquer le réchauffement ou le refroidissement du contenu de la cuve intérieure,
**CARACTERISE EN CE QUE**
avant la rupture de la barrière à casser (5), la première chambre (3) est à une pression subatmosphérique et la seconde chambre (4) est à une pression supérieure, de façon qu'au moment de la rupture de la barrière à casser, qui est une mince feuille de matière cassante, l'égalisation de cette différence de pression facilite l'entrée du second réactif chimique liquide (17) dans la première chambre pour favoriser un mélange rapide des réactifs chimiques dans la première chambre.

2. Récipient selon la revendication 1, comprenant en outre un couvercle amovible (10) couvrant le sommet du récipient afin de créer une surface de support stable pour faire reposer sur une surface plane le récipient retourné, le couvercle amovible créant un espace vide entre le film d'étanchéité amovible (9) sur le sommet de la cuve intérieure (1) et le couvercle de façon que, après le retournement du récipient, l'enfoncement de la paroi mobile de fond (14) de la cuve extérieure pour rompre la barrière à casser (5), en secouant davantage le récipient pour favoriser le mélange des premier et second réactifs chimiques et en posant le récipient retourné debout sur une surface plane, une éventuelle augmentation du volume du contenu de la cuve intérieure soit absorbée dans l'espace vide par étirement du film d'étanchéité amovible.

3. Récipient selon la revendication 1 ou la revendication 2, dans lequel la seconde chambre (4) comporte une valve de libération de gaz pour libérer dans l'atmosphère les gaz éventuels générés ou amenés thermiquement à se détendre par la réaction chimique entre les réactifs à la suite de la rupture de la barrière à casser (5).

4. Récipient selon la revendication 1 ou la revendication 2, dans lequel les première et seconde chambres (3, 4) sont des chambres étanches, et la seconde chambre (4) est une chambre à volume variable apte à s'agrandir pour recevoir les gaz éventuels générés ou amenés thermiquement à se détendre par la réaction chimique entre les réactifs à la suite de la rupture de la barrière à casser (5).

5. Récipient selon la revendication 4, dans lequel la seconde chambre (4) a une paroi latérale ondulée (12) de façon qu'un aplanissement partiel des ondulations provoque l'accroissement du volume interne de la seconde chambre.

6. Récipient selon la revendication 5, dans lequel la seconde chambre (4) à volume variable permet aussi un resserrement partiel des ondulations afin de provoquer une réduction du volume interne de la seconde chambre lorsque, pour commencer, la barrière à casser (5) est rompue et que l'égalisation de pression entre les première et seconde chambres (3, 4) provoque une chute initiale de la pression régnant dans la seconde chambre.

7. Récipient selon l'une quelconque des revendications précédentes, comprenant en outre un indicateur de température comportant un message ou un symbole imprimé à l'extérieur du récipient avec une encre thermoréactive qui change de couleur lorsque est atteinte une température prédéfinie de cette paroi extérieure du récipient.

8. Récipient selon la revendication 7, dans lequel le message ou symbole est imprimé sur la paroi de fond du récipient de manière à n'être visible que lorsque le récipient est retourné.

9. Récipient selon l'une quelconque des revendications précédentes, dans lequel les premier et second réactifs chimiques (17, 19) réagissent l'un avec l'autre pour créer un produit de réaction solide ou semi-solide.

10. Récipient selon la revendication 9, dans lequel les premier et second réactifs chimiques (17, 19) contiennent des produits chimiques qui réagissent les uns avec les autres pour générer une quantité de gaz suffisante pour que le produit de réaction solide ou semi-solide soit rendu poreux.

11. Récipient selon la revendication 10, dans lequel le premier réactif chimique (17) contient une petite quantité de bicarbonate de soude, NaHCO₃, et le second réactif chimique (19) est acide, de telle sorte qu'au moment de son apport se dégage une petite quantité de CO₂ suffisante pour rendre poreux le produit de réaction solide ou semi-solide.
